# EUROPEAN PATENT SPECIFICATION

(11) **EP 4 029 228 B1**
(45) Date of publication and mention of the grant of the patent: **11.12.2024**
(21) Application number: 19794497.8
(22) Date of filing: 23.10.2019
(51) Int. Cl.: H04M 1/02, G06F 1/16, E05D 1/00, E05D 1/02

(54) **SLIDING DISPLAY ASSEMBLY FOR A FOLDABLE ELECTRONIC DEVICE**
GLEITENDE ANZEIGEVORRICHTUNG FÜR EINE KLAPPBARE ELEKTRONISCHE VORRICHTUNG
ENSEMBLE D'AFFICHAGE COULISSANT POUR DISPOSITIF ÉLECTRONIQUE PLIABLE

(43) Date of publication of application: 20.07.2022
(73) Proprietor: Huawei Technologies Co., Ltd., Longgang District Shenzhen, Guangdong 518129 (CN)
(72) Inventor: HEISKANEN, Juuso, 16440 Kista (SE)
(74) Representative: Maiwald GmbH
(86) International application number: PCT/EP2019/078878
(87) International publication number: WO 2021/078378

(56) References cited:
- EP-A2- 2 765 479
- US-A1- 2012 314 399
- US-A1- 2013 010 405

## Description

### TECHNICAL FIELD

The disclosure relates to a foldable assembly for an electronic device, the foldable assembly comprising a foldable surface layer superimposed onto a foldable support layer, the support layer comprising a first body, a second body, and a pivot hinge.

### BACKGROUND

The size of electronic devices, such as tablets and mobile phones, is an important consideration when designing electronic devices. The user oftentimes requests the outer dimensions of the device to be as small as possible while still providing a display which is as large as possible.

This problem may be solved, e.g., by means of a foldable electronic device comprising one or several support bodies, e.g. interconnected by means of hinges, covered by a display. The support body/bodies and the display can be folded together to provide an as small electronic device as possible, and unfolded to provide an as large display as possible.

However, as the electronic device is folded, the display and/or the support body/bodies will stretch on one side of the neutral axis and compress on the other side of the neutral axis. The neutral axis is the axis along which the display or the housing remains unchanged as it is folded, i.e. it neither stretches nor compresses.

EP 2 765 479 A2 describes a flexible portable terminal that includes a folding portion configured to bend at one end of a body of the flexible portable terminal in a direction to a front surface or a rear surface of the flexible portable terminal, a flexible display unit configured to be mounted on the body of the flexible portable terminal, and to bend in the front surface or the rear surface of the flexible portable terminal according to a bending direction of the folding portion, and a sliding portion configured to enable one end of the flexible display unit to slide according to a difference of a compression/tension caused by a difference of an elongation between the folding portion and the flexible display unit when the folding portion is bent.

US 2012/314399 A1 describes a foldable assembly that includes first flanges integrated in a first housing part of a foldable electronic device. The foldable electronic device includes a flexible display, and the first housing part is integrated with a first section of the flexible display. The foldable assembly also includes second flanges integrated in a second housing part of the foldable electronic device, and the second housing part is integrated with a second section of the flexible display. The second flanges are implemented to fold-interlock with the first flanges to form a bend radius of the flexible display around the first and second flanges in a closed position of the foldable electronic device. The first and second flanges are also implemented to support the flexible display in the closed position of the foldable electronic device.

US 2013/10405A1 describes electronic devices that contain multiple housing portions. The housing portions may be coupled together using hinges. The hinges may include hinges based on a three-bar linkage, hinges based on a four-bar linkage, hinges with slotted members, hinges formed from flexible support structures, and hinges based on flexible housing structures. Flexible displays may be mounted to the housing portions overlapping the hinges. When the housing portions in a device are rotated relative to each other, the flexible display may bend. The hinge may be configured to allow the flexible display to be placed in a front-to-front configuration in which an active side of the display faces itself or a back-to-back configuration. Engagement structures may be used to help the housing grip external objects and to hold the housing portions together. The hinges may be provided with rotational detents to help hold the flexible display in desired positions.

### SUMMARY

It is an object to provide an improved foldable electronic device. The foregoing and other objects are achieved by the features of the independent claim. Further implementation forms are apparent from the dependent claims, the description, and the figures.

According to a first aspect, there is provided a foldable assembly for an electronic device, the foldable assembly comprising a foldable first surface layer superimposed onto a foldable support layer, the support layer comprising a first body, a second body, and a pivot hinge, the pivot hinge interconnecting the first body and the second body, the first body and the second body being pivotable relative each other around an assembly rotation axis of the pivot hinge such that the foldable assembly is moveable between an unfolded position and at least one folded end position, the first body and the second body being aligned in a common plane when the foldable assembly is in the unfolded position, the first body being superimposed onto the second body when the foldable assembly is in the folded end position, the support layer further comprising at least one linear actuator, a first end of the linear actuator being connected to the pivot hinge and a second, opposite end of the linear actuator being connected to one of the first surface layer and the second body, an actuator axis extending between the first and second ends and perpendicular to the assembly rotation axis, wherein pivoting of the first body and/or the second body around the assembly rotation axis actuates the linear actuator such that the linear actuator urges one of the first surface layer and the second body to move, in relation to the pivot hinge, along the actuator axis.

Such a solution allows the display and/or the support body of an electronic device to slide in relation to each other, as the electronic device is folded, hence preventing the surface layer, such as the display, from becoming wrinkled and/or permanently deformed since the display or the support body neither stretches nor compresses as the device is folded.

In a possible implementation form of the first aspect, the support layer has a first neutral axis and the first surface layer has a second neutral axis, the first neutral axis extending parallel to the second neutral axis, and the first neutral axis being offset from the second neutral axis along an offset axis extending perpendicular to the assembly rotation axis and perpendicular to the actuator axis.

In a further possible implementation form of the first aspect, a first dimension of a first outer surface of the pivot hinge is larger than a corresponding second dimension of a second outer surface of the pivot hinge when the foldable assembly is in the folded end position,
the linear actuator being actuated by a difference between the first dimension and the second dimension. This allows for a foldable assembly which has as small outer dimensions as possible, while having a range of motion which allows, e.g., the first body and the second body to be moved between the unfolded position, in which the bodies extend to provide a maximum electronic device width, and a folded position in which the two bodies are superimposed onto each other such that they extend to provide only a minimum electronic device width.

In a further possible implementation form of the first aspect, the pivot hinge comprises a row of at least partially tapered hinge blades interconnected by means of an elongated connection element extending along the actuator axis, facilitating a foldable assembly which takes up minimal space and which is inherently stable when being folded together.

In a further possible implementation form of the first aspect, the foldable assembly comprises a foldable second surface layer superimposed onto the support layer, the second end of the linear actuator being connected to at least one of the first surface layer and the second surface layer, the linear actuator urging the first surface layer and the second surface layer to move, in relation to the pivot hinge, along the actuator axis. This allows a further surface layer, such as the back cover of an electronic device, to slide as the electronic device is folded, hence preventing the back cover from becoming wrinkled and/or permanently deformed since the back cover neither stretches nor compresses as the device is folded.

In a further possible implementation form of the first aspect, the first surface layer moves in a first direction and the second surface layer moves in an opposite second direction along the actuator axis.

In a further possible implementation form of the first aspect, the support layer further comprises sliding rails interconnecting the pivot hinge and the second body, the second body being arranged to move along the sliding rails along the actuator axis in response to actuation of the linear actuator. The sliding rails provide support for the surface layer(s) and the movement between the first body and the second body prevents the surface layer(s) from being affected by folding.

In a further possible implementation form of the first aspect, the linear actuator comprises
a rotation shaft, at least one first linear drive arrangement interconnected with the rotation shaft and the first body, and extending through the pivot hinge, at least one second linear drive arrangement interconnected with the rotation shaft, the first linear drive arrangement and the second linear drive arrangement being linearly actuated in one direction, or two directions simultaneously, along the actuator axis. This allows for a linear actuation which takes up little space and which can be fitted into any suitable, available location.

In a further possible implementation form of the first aspect, the rotation shaft extends perpendicular to the first neutral axis and the second neutral axis, the rotation shaft comprising a first toothed section, the second body comprising a second toothed section engaging the first toothed section, wherein movement of the first linear drive arrangement along the actuator axis generates a first rotation of the rotation shaft and the first toothed section, the first rotation moving the second body in a first direction along the actuator axis, and wherein an opposite movement of the first linear drive arrangement along the actuator axis generates a second opposite rotation of the rotation shaft and the first toothed section, the second rotation moving the second body in a second direction along the actuator axis.

In a further possible implementation form of the first aspect, the rotation shaft extends in parallel with the assembly rotation axis, a rotation shaft center axis intersecting the first neutral axis.

In a further possible implementation form of the first aspect, the second linear drive arrangement is connected to the first surface layer or the second surface layer, the first surface layer and the second surface layer being moved in opposite directions, along the actuator axis, when the linear actuator is actuated.

In a further possible implementation form of the first aspect, the first linear drive arrangement and/or the second linear drive arrangement comprises at least one of a chain, a wire, a rack, and a sheet.

In a further possible implementation form of the first aspect, the rotation shaft comprises pinions and/or sections having different diameters, at least one of the first linear drive arrangement and the second linear drive arrangement being interconnected with each pinion or shaft diameter section. This allows neighboring hinge blades to be dynamically flexible yet still provide sufficient static support for, e.g., a display extending across the foldable assembly.

In a further possible implementation form of the first aspect, the first linear drive arrangement comprises at least one folding section, extending through the pivot hinge, and at least one linear section interconnected with the folding section, and the rotation shaft comprises a first pinion, the linear section comprising a first rack engaging the first pinion at a first location and extending along the actuator axis.

In a further possible implementation form of the first aspect, movement of the first rack in a first direction along the actuator axis initiates a first rotation of the first pinion and the rotation shaft, and movement of the first rack in an opposite, second direction along the actuator axis initiates an opposite, second rotation of the first pinion and the rotation shaft.

In a further possible implementation form of the first aspect, the linear section further comprises a second rack engaging the first pinion at a second location opposite the first location and extending along the actuator axis, the first rack and the second rack extending on opposite sides of, and with equidistant spacing from, the first neutral axis. As a result, the movement generated by the linear actuator is synchronized on both sides of the neutral axis.

In a further possible implementation form of the first aspect, simultaneous movement of the first rack in the first direction and the second rack in the second direction along the actuator axis initiates the first rotation of the first pinion and the rotation shaft, and wherein simultaneous movement of the first rack in the second direction and the second rack in the first direction along the actuator axis initiates the second rotation of the first pinion and the rotation shaft.

In a further possible implementation form of the first aspect, the rotation shaft comprises a second pinion, and the second linear drive arrangement comprises a third rack engaging the second pinion at a first location and extending along the actuator axis.

In a further possible implementation form of the first aspect, the second linear drive arrangement further comprises a fourth rack engaging the second pinion at a second location opposite the first location and extending along the actuator axis, the third rack and the fourth rack extending on opposite sides of, and with equidistant spacing from, the first neutral axis.

In a further possible implementation form of the first aspect, the first linear drive arrangement and the second linear drive arrangement each comprise at least two wire sections extending on opposite sides of, with equidistant spacing from, the first neutral axis.

In a further possible implementation form of the first aspect, movement of the first linear drive arrangement along the actuator axis initiates one of a first rotation or an opposite second rotation of the rotation shaft, the first rotation or the second rotation of the rotation shaft initiating a corresponding movement of the second linear drive arrangement along the actuator axis, allowing the movement of the surface layers to be synchronized and simultaneous.

In a further possible implementation form of the first aspect, the foldable assembly further comprises a motor adapted for rotating the rotation shaft, and wherein rotation of the rotation shaft initiates movement of at least one of the first linear drive arrangement and the second linear drive arrangement along the actuator axis.

In a further possible implementation form of the first aspect, the foldable assembly comprises at least one intermediate layer located between the first surface layer and the support layer, or between the second surface layer and the support layer, and the rotation shaft comprises pinions and/or sections having different diameters, one linear drive arrangement being interconnected with each pinion or shaft diameter section, and each linear drive arrangement being connected to one of the first surface layer, the second surface layer, and the intermediate layer. This allows different layers to be moved at different speeds and/or times, such that the movement of all layers can be synchronized.

According to a second aspect, there is provided an electronic device comprising the foldable assembly according to the above, the foldable assembly being moveable between an unfolded position and a first folded end position, the first surface layer of the foldable assembly comprising a display, and/or the second surface layer of the foldable assembly comprising a back cover, the support layer supporting at least one of the first surface layer and the second surface layer. This allows the surface layer and/or the support body/bodies of the electronic device to slide in relation to each other, as the electronic device is folded, hence preventing the surface layer from becoming wrinkled and/or permanently deformed since the surface layer and the support body/bodies neither stretches nor compresses as the device is folded. Furthermore, the solution provides support to the surface layer which extends from one body to another across the foldable assembly.

In a possible implementation form of the second aspect, the display and/or the back cover is fixedly connected to the first body of the support layer, and pivoting the first body or the second body of the support layer around the pivot hinge of the support layer actuates the linear actuator of the support layer, the linear actuator urging the display and/or the back cover to slide in relation to the pivot hinge such that an overlap between the display and/or the back cover and the second body varies, overlap between the display and the second body being at a minimum when the foldable assembly is in the first folded end position and/or overlap between the back cover and the second body being at a maximum when the foldable assembly is in the first folded end position, avoiding any stress on the display during folding as the display is not affected by any dimensional changes.

In a further possible implementation form of the second aspect, the foldable assembly is moveable between an unfolded position and a second folded end position, the overlap between the display and the second body being at a maximum when the foldable assembly is in the second folded end position and/or the overlap between the back cover and the second body being at a minimum when the foldable assembly is in the second folded end position.

In a further possible implementation form of the second aspect, the display or the back cover is fixedly connected to the first body and second body of the support layer, the support layer furthermore comprising sliding rails interconnecting the pivot hinge of the support layer and the second body, and pivoting the first body or the second body around the pivot hinge actuates the linear actuator of the support layer, the linear actuator urging the second body to slide, on the sliding rails, in relation to the pivot hinge such that the distance between the pivot hinge and the second body varies, the distance between the pivot hinge and the second body being at a minimum when the foldable assembly is in the first folded end position. The sliding rails provide support for the display and/or the back cover, and since any sliding movement is maintained within the support layer neither the display nor the back cover is affected when folding.

In a further possible implementation form of the second aspect, the foldable assembly is moveable between an unfolded position and a second folded end position, the distance between the pivot hinge and the second body being at a maximum when the foldable assembly is in the second folded end position.

This and other aspects will be apparent from and the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows a partial perspective view of a foldable assembly in accordance with one embodiment of the present invention, wherein the foldable assembly is in a folded end position;
Fig. 2 shows a partial perspective view of a foldable assembly in accordance with one embodiment of the present invention, wherein the foldable assembly is in an unfolded position;
Fig. 3 a shows a schematic side view of a pivot hinge of the foldable assembly in accordance with one embodiment of the present invention, wherein the pivot hinge is in an unfolded position as well as in both folded end positions;
Fig. 3b shows a schematic side view of a pivot hinge of the foldable assembly in accordance with a further embodiment of the present invention, wherein the pivot hinge is in an unfolded position and in a folded end position;
Fig. 4a shows a partial side view of a pivot hinge of the foldable assembly in accordance with one embodiment of the present invention, wherein the pivot hinge is in an unfolded position;
Fig. 4b shows a partial side view of the embodiment of Fig. 3a, wherein the pivot hinge is in a folded end position;
Fig. 5a shows a perspective view of a foldable assembly in accordance with one embodiment of the present invention, wherein the foldable assembly is in an unfolded position;
Fig. 5b shows a perspective view of a section of the embodiment of Fig. 5a, wherein the foldable assembly is in a folded end position;
Fig. 5c shows a perspective view of a section of the embodiment of Fig. 5a and 5b, wherein the foldable assembly is in the unfolded position;
Fig. 6a shows a perspective view of a foldable assembly in accordance with a further embodiment of the present invention, wherein the foldable assembly is in an unfolded position;
Fig. 6b shows a perspective view of the embodiment of Fig. 6a, wherein the foldable assembly is in a folded end position;
Fig. 7 a shows a perspective view of a foldable assembly in accordance with a further embodiment of the present invention, wherein the foldable assembly is in an unfolded position;
Fig. 7b shows a perspective view of the embodiment of Fig. 7b, wherein the linear actuator is highlighted;
Fig. 8 shows a perspective view of a foldable assembly in accordance with a further embodiment of the present invention;
Fig. 9 shows a cross-sectional side view of an electronic device in accordance with one embodiment of the present invention, wherein the electronic device is in an unfolded position as well as in both folded end positions;
Fig. 10 shows a perspective view of an electronic device in accordance with one embodiment of the present invention, wherein the electronic device is in an unfolded position as well as in both folded end positions;
Fig. 11 shows a cross-sectional side view of an electronic device in accordance with one embodiment of the present invention, wherein the electronic device is in an unfolded position as well as in both folded end positions;
Fig. 12 shows a cross-sectional side view of an electronic device in accordance with one embodiment of the present invention, wherein the electronic device is in an unfolded position as well as in both folded end positions;
Fig. 13 shows a partial perspective view of a foldable assembly in accordance with one embodiment of the present invention, wherein the foldable assembly is in an unfolded position as well as in both folded end positions.

### DETAILED DESCRIPTION

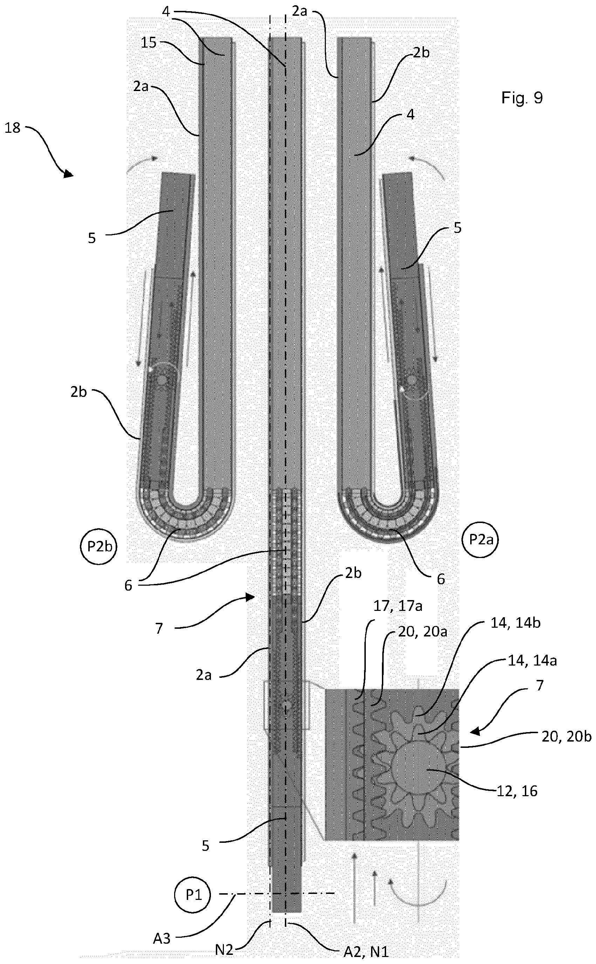

Figs. 9 to 12 show an electronic device 18 comprising a display 2a, a back cover 2b, and a foldable assembly 1 which is moveable between an unfolded position P1 and at least a first folded end position P2a. In a further embodiment, the foldable assembly 1 is also moveable between the unfolded position P1 and a second folded end position P2b. As the foldable assembly 1 is folded, the electronic device 18 is also folded from an unfolded position to a folded end position.

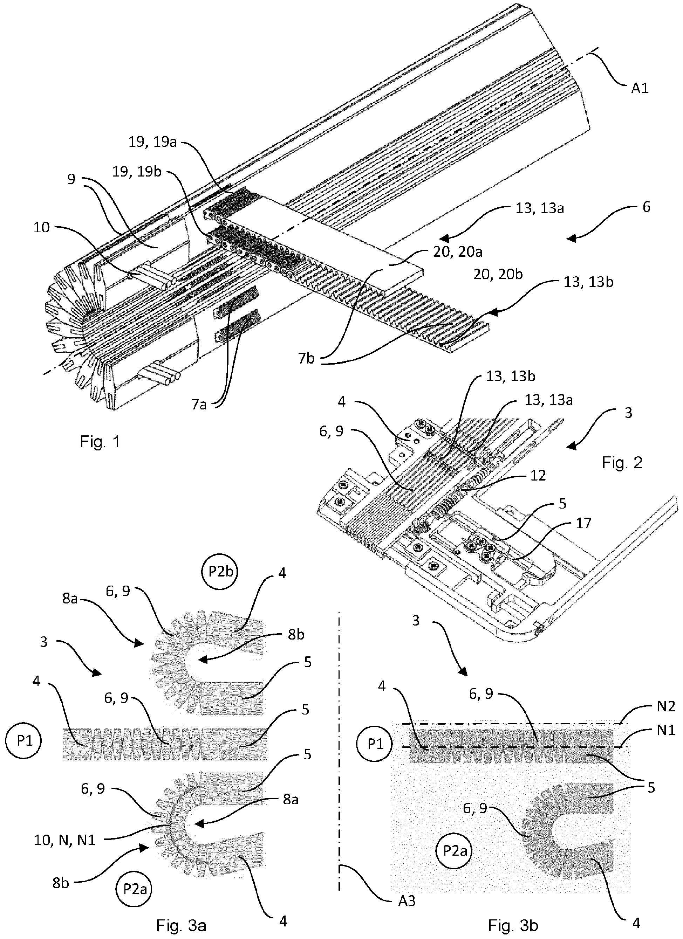

The foldable assembly 1 comprises a foldable first surface layer 2a, such as the above-mentioned display, which is superimposed onto a foldable support layer 3. The support layer 3 comprises, as shown in Figs. 2, 3a, and 3b, a first body 4, a second body 5, and a pivot hinge 6, the pivot hinge 6 interconnecting the first body 4 and the second body 5. One embodiment of the pivot hinge 6 is shown in detail in Fig. 1.

The first body 4 and the second body 5 are pivotable relative each other around an assembly rotation axis A1 of the pivot hinge 6 such that the foldable assembly 1, and hence the electronic device 18, is moveable between an unfolded position P1 and at least one folded end position P2a, P2b.

The first body 4 and the second body 5 are aligned in a common plane when the foldable assembly 1 is in the unfolded position P1. The second body 5 is superimposed onto the first body 4 when the foldable assembly 1 is in the first folded end position P2a. Furthermore, the first body 4 is superimposed onto the second body 5 when the foldable assembly 1 is in the second folded end position P2b.

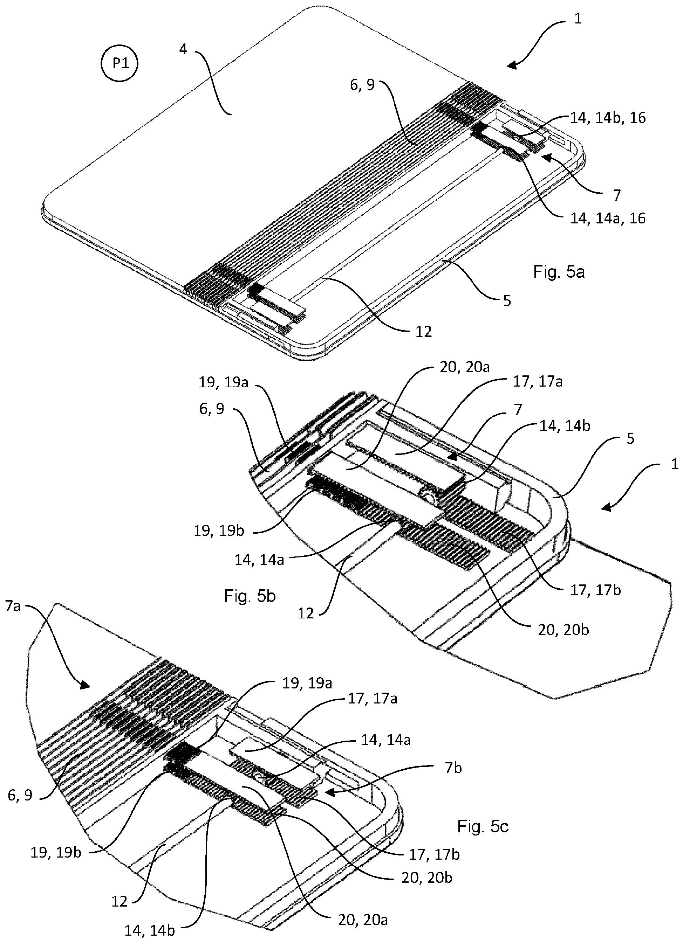

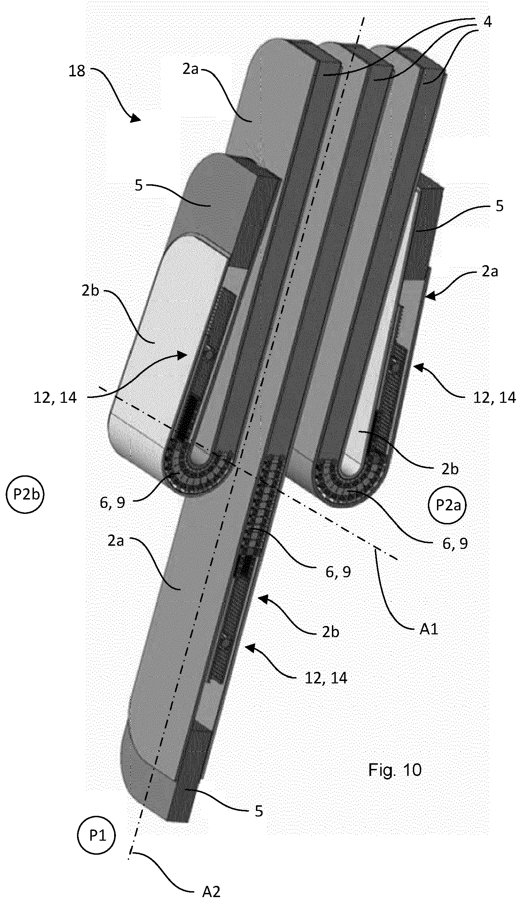

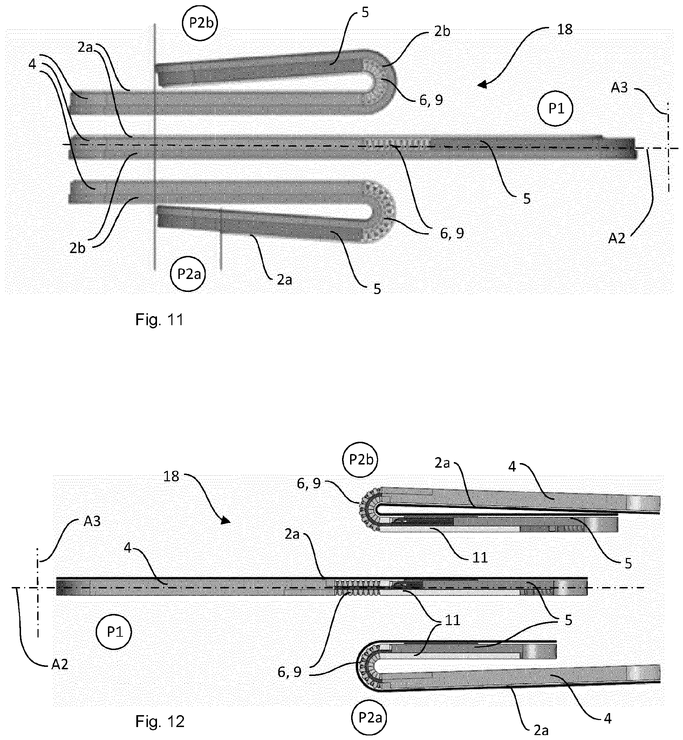

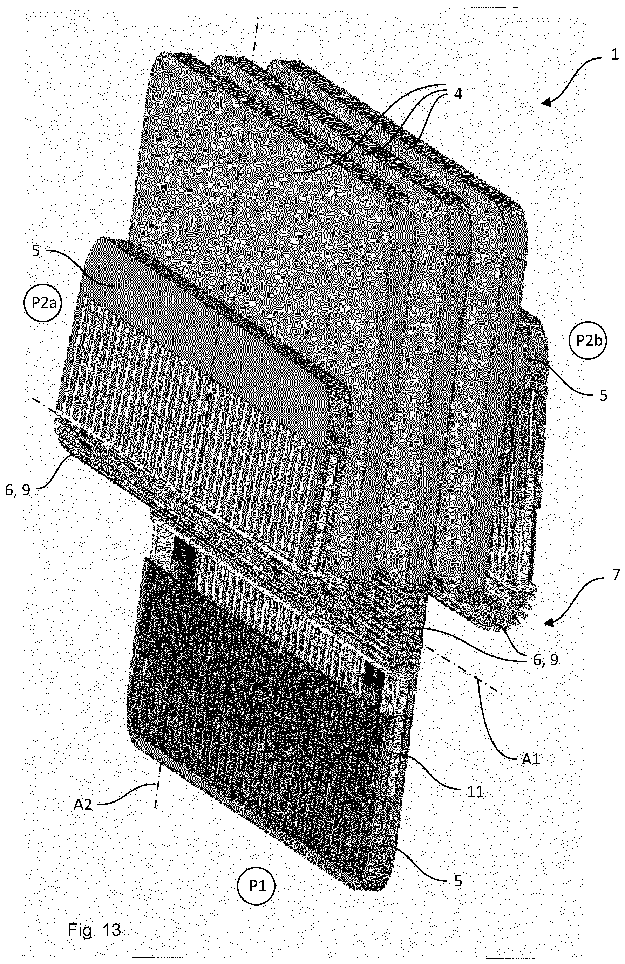

The support layer 3 further comprises at least one linear actuator 7, as shown in Figs. 5a to 6b. A first end 7a of the linear actuator 7 is connected to the first body 4 and a second, opposite end 7b of the linear actuator 7 is connected to either the first surface layer 2a, as indicated in Figs. 9 and 10, or to the second body 5, as indicated in Fig. 13. The connection may be fixed using, e.g., adhesive or fasteners such as screws. An actuator axis A2 extends between the first 7a and second 7b ends of the linear actuator 7, and perpendicular to the assembly rotation axis A1. By pivoting the first body 4 and/or the second body 5 around the assembly rotation axis A1, the linear actuator 7 is actuated such that it urges one of the first surface layer 2a and the second body 5 to move, in relation to the pivot hinge 6, along the actuator axis A2. Movement of the first surface layer 2a in relation to the pivot hinge 6 is shown in Fig. 11. Movement of the second body 5 in relation to the pivot hinge 6 is shown in Fig. 12.

As shown in Fig. 3b, the support layer 3 may have a first neutral axis N1 and the first surface layer 2a a second neutral axis N2, the first neutral axis N1 extending parallel with the second neutral axis N2. The first neutral axis N1 is offset from the second neutral axis N2 along an offset axis A3 extending perpendicular to the assembly rotation axis A1 and perpendicular to the actuator axis A2.

A first dimension of a first outer surface 8a of the pivot hinge 6 is larger than a corresponding second dimension of a second outer surface 8b of the pivot hinge 6 when the foldable assembly 1 is in folded end position P2b, as shown in Fig. 3 a. Correspondingly, the first outer surface 8a of the pivot hinge 6 is smaller than the corresponding second dimension of the second outer surface 8b of the pivot hinge 6 when the foldable assembly 1 is in folded end position P2a, also shown in Fig. 3a. The linear actuator 7 is actuated by a difference between the first dimension and the second dimension. As the foldable assembly is folded to end position P2b, the dimensions of the first outer surface 8a increases and the first surface layer 2a is pulled in one direction across the pivot hinge 6, as is shown in the uppermost drawing of Fig. 11. Correspondingly, as the foldable assembly is folded to the opposite end position P2a, the dimensions of the first outer surface 8a decreases and the first surface layer 2a is pulled in the opposite direction across the pivot hinge 6, as is shown in the lowermost drawing of Fig. 11.

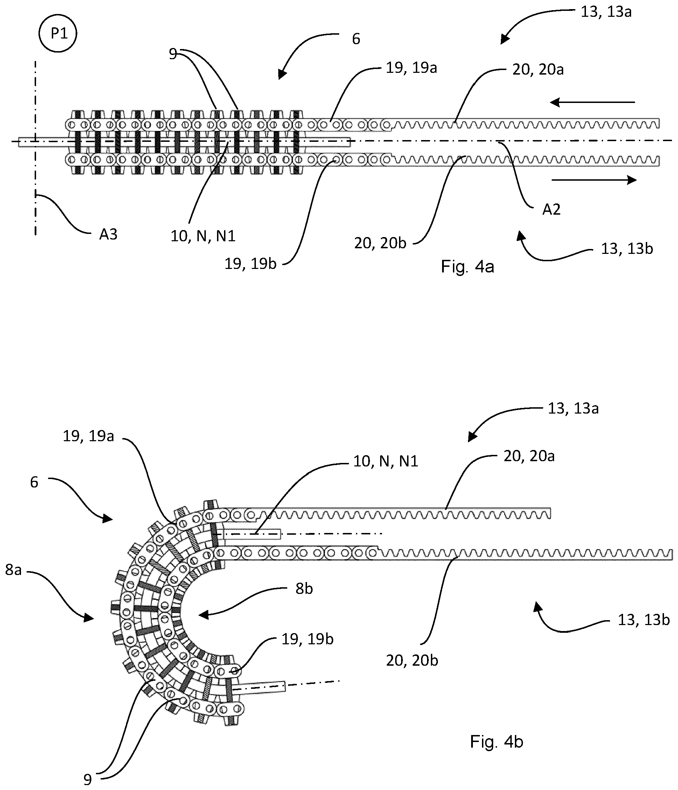

The foldable assembly 1 may comprise a foldable second surface layer 2b superimposed onto the support layer 3, the second end 7b of the linear actuator 7 being connected to at least one of the first surface layer 2a and the second surface layer 2b (not shown). In such an embodiment the linear actuator 7 urges the first surface layer 2a and the second surface layer 2b to move, in relation to the pivot hinge 6, along the actuator axis A2. In one embodiment, the first surface layer 2a moves in a first direction and the second surface layer 2b moves in an opposite second direction along the actuator axis A2. This oppositely directed movement is indicated in Fig. 4a by means of arrows.

The second surface layer 2b may comprise a third neutral axis (not shown), the third neutral axis extending in parallel with the first neutral axis N1 and the second neutral axis N2. The third neutral axis is offset from the second neutral axis N2 along the offset axis A3 and extends on the opposite side of the second neutral axis N2 than the first neutral axis N1.

The support layer 3 may further comprise sliding rails 11 interconnecting the pivot hinge 6 and the second body 5, the sliding rails 11 being arranged to move along the second body 5 along the actuator axis A2 in response to actuation of the linear actuator 7 as is shown in Figs. 12 and 13. In such an embodiment, the first surface layer 2a and/or the second surface layer 2b are stationary in relation to the first body 4 and the second body 5 of the support layer 3,i.e. the first surface layer 2a and/or the second surface layer 2b are fixed to the first body 4 as well as the second body 5. All sliding movement is maintained within the support layer 3 and executed by means of the sliding rails 11, the second body 5, as well as portions of the first surface layer 2a and/or the second surface layer 2b sliding along the sliding rails 11. Subsequently, the first surface layer 2a does not need to stretch.

The pivot hinge 6 preferably comprises a row of at least partially tapered hinge blades 9 interconnected by means of an elongated connection element 10 extending along the actuator axis A2, as shown in Figs. 4a and 4b. The hinge blades 9 may be tapered in one direction, as shown in Fig. 3b, or in two directions, as shown in Fig. 3 a. One-directional tapering allows the pivot hinge 6 to fold in only one direction, e.g. to first folded end position P2a, while bi-directional tapering allows the pivot hinge 6 to fold in two directions, i.e. to first folded end position P2a as well as second folded end position P2b.

The linear actuator 7 may comprise a rotation shaft 12, at least one first linear drive arrangement 13, and at least one second linear drive arrangement 17. The first linear drive arrangement 13 is interconnected with the rotation shaft 12 and the first body 4, and extends through the pivot hinge 6. The second linear drive arrangement 17 is interconnected with the rotation shaft 12. The first linear drive arrangement 13 and the second linear drive arrangement 17 are linearly actuated in one direction, or two directions simultaneously, along the actuator axis A2.

The second linear drive arrangement 17 may be connected to the first surface layer 2a or the second surface layer 2b, the first surface layer 2a and the second surface layer 2b being moved in opposite directions, along the actuator axis A2, when the linear actuator 7 is actuated.

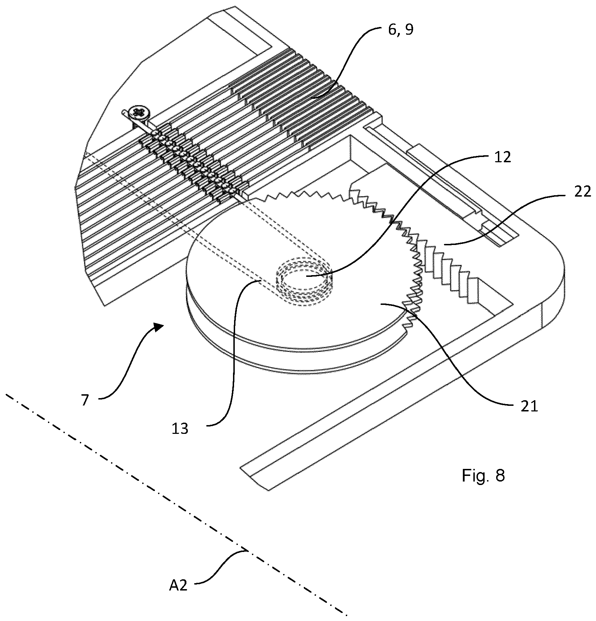

In one embodiment, see Fig. 8, the rotation shaft 12 extends perpendicular to the first neutral axis N1 and the second neutral axis N2. The rotation shaft 12 comprises a first toothed section 21, and the second body 5 comprises a second toothed section 22 engaging the first toothed section 21. Movement of the first linear drive arrangement 13 along the actuator axis A2 generates a first rotation of the rotation shaft 12 and the first toothed section 21 , which, in turn, results in movement of the second body 5 in a first direction along the actuator axis A2 by means of the interaction between the first toothed section 21 and the second toothed section 22. Correspondingly, an opposite, movement the first linear drive arrangement 13 along the actuator axis A2 generates an oppositely directed second rotation of the rotation shaft 12 and the first toothed section 21, which, in turn, results in movement of the second body 5 in a second direction along the actuator axis A2.

In a further embodiment, the rotation shaft 12 extends in parallel with the assembly rotation axis A1, such that the rotation shaft 12 center axis intersects the first neutral axis N1, the rotation shaft extending within a neutral plane comprising the first neutral axis N1.

The first linear drive arrangement 13 and/or the second linear drive arrangement 17 may comprise at least one of a chain, a wire, a rack, and a sheet, or a combination such as a chain and a rack.

The rotation shaft 12 may comprise pinions 14 and/or sections 16 having different diameters, allowing one first linear drive arrangement 13 or one second linear drive arrangement 17 to be interconnected with each pinion 14 or shaft diameter section 16.

As shown in Figs. 1, 4a to 4b, and 5a to 5c, the first linear drive arrangement 13 may comprise at least one folding section 19, such as a chain, extending through the pivot hinge 6, and at least one linear section 20 interconnected with the folding section 19. The rotation shaft 12 may comprise a first pinion 14a, and the linear section 20 comprise a first rack 20a engaging the first pinion 14a at a first location and extend along the actuator axis. Movement of the first rack 20a in a first direction along the actuator axis A2 initiates a first rotation of the first pinion 14a and the rotation shaft 12, and movement of the first rack 20a in an opposite, second direction along the actuator axis A2 initiates an opposite, second rotation of the first pinion 14a and the rotation shaft 12. Movement in the first direction along the actuator axis A2 pulls the folding section 19 in the first direction, and movement in the second direction along the actuator axis A2 pushes the folding section 19 in the second direction.

Correspondingly, as shown in Fig. 9, the linear section 20 may further comprise a second rack 20b engaging the first pinion 14a at a second location opposite the first location and extending along the actuator axis. The first rack 20a and the second rack 20b extend on opposite sides of, and with equidistant spacing from, the first neutral axis N1. Simultaneous movement of the first rack 20a in the first direction and the second rack 20b in the second direction along the actuator axis A2 initiates the first rotation of the first pinion 14a and the rotation shaft 12. Simultaneous movement of the first rack 20a in the second direction and the second rack20b in the first direction along the actuator axis A2 initiates the second rotation of the first pinion 14a and the rotation shaft 12. The first rack 20a pushes the folding section 19 in the second direction and the second rack 20b, simultaneously, pulls the folding section 19 in the second direction.

The rotation shaft 12 may comprise a second pinion 14b, as shown in Figs. 5a to 5c. The second linear drive arrangement 17 comprises a third rack 17a engaging the second pinion 14b at a first location and extending along the actuator axis A2.

The second linear drive arrangement 17 may further comprise a fourth rack 17b engaging the second pinion 14b at a second location opposite the first location and extending along the actuator axis A2. The third rack 17a and the fourth rack 17b extend on opposite sides of, and with equidistant spacing from, the first neutral axis N1.

The first rack 20a may be connected to the first surface layer 2a while the second rack 20b is connected to the second surface layer 2b. Correspondingly, the first rack 20a may be connected to the second surface layer 2b while the second rack 20b is connected to the first surface layer 2a. Regardless, the first surface layer 2a and the second surface layer 2b are moved in opposite directions, along the actuator axis A2, when the linear actuator 7 is actuated.

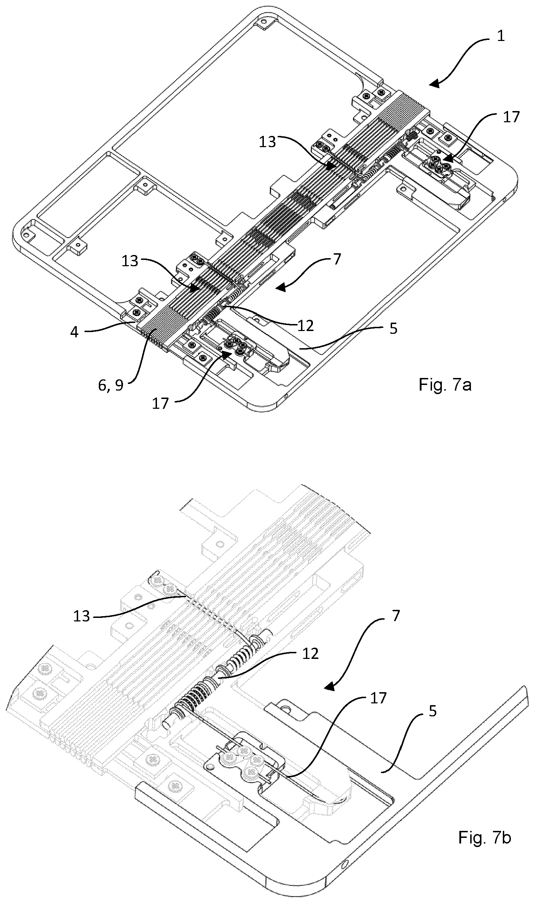

The first linear drive arrangement 13 and the second linear drive arrangement 17 may each comprise two wire sections extending on opposite sides of, with equidistant spacing from, the first neutral axis N1, as shown in Figs. 7a to 7b.

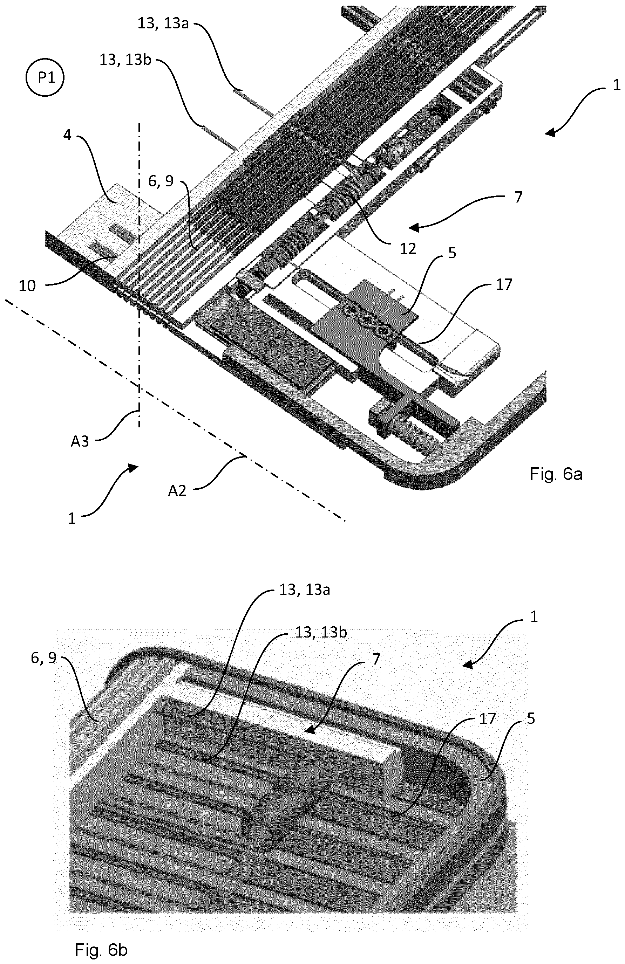

When the linear drive arrangements 13, 17 comprise a wire it may be partially wound around the rotation shaft 12, as shown in Figs. 6a to 7b, and extend along the actuator axis A2 and on opposite sides of, with equidistant spacing from, the first neutral axis N1. A first rotation of the rotation shaft 12 rotates the linear drive arrangement 13 in a first direction, and an opposite, second rotation of the rotation shaft 12 rotates the linear drive arrangement 13 in a second direction. The wire may comprise at least two separate wire sections extending in parallel between the first body 4 and the second body 5 of the support layer, or the wire may comprise a loop.

The foldable assembly 1 may further comprise at least one intermediate layer 15 located between the first surface layer 2a and the support layer 3, or between the second surface layer 2b and the support layer 3. The rotation shaft 12 may comprise pinions 14 and/or sections 16 having different diameters, as shown in Fig. 9, one linear drive arrangement 13 being interconnected with each pinion 14 or shaft diameter section 16, each linear drive arrangement 13 being connected to one of the first surface layer 2a, the second surface layer 2b, and the intermediate layer 15. Hence, the difference in distance to the first neutral axis N1 is compensated for, and each pivot point on the pivot hinge 6 is rotated at the same speed, making the pivot points turn one by one.

Movement of the first linear drive arrangement 13 along the actuator axis A2 initiates one of a first rotation or an opposite second rotation of the rotation shaft 12, the first rotation or the second rotation of the rotation shaft 12 initiating a corresponding movement of the second linear drive arrangement 17 along the actuator axis A2. This allows the movement of the surface layers 2a, 2b to be synchronized and simultaneous.

The foldable assembly 1 may further comprise a motor adapted for rotating the rotation shaft 12, and wherein rotation of the rotation shaft 12 initiates movement of at least one of the first linear drive arrangement 13 and the second linear drive arrangement 17 along the actuator axis A2.

As previously mentioned, the present disclosure also relates to an electronic device 18 comprising the above described foldable assembly 1. The first surface layer 2a of the foldable assembly 1 comprises the display, and/or the second surface layer 2b of the foldable assembly 1 comprises the back cover. The support layer 3 supports at least one of the first surface layer/display 2a and the second surface layer/back cover 2b.

The display 2a and/or the back cover 2b may be fixedly connected to the first body 4 of the support layer 3, and pivoting the first body 4 or the second body 5 of the support layer 3 around the pivot hinge 6 of the support layer 3 will actuate the linear actuator 7. The linear actuator 7 urges the display 2a and/or the back cover 2b to slide in relation to the pivot hinge 6 such that an overlap between the display 2a and/or the back cover 2b and the second body 5 varies. The overlap between the display 2a and the second body 5 is at a minimum when the foldable assembly 1 is in the first folded end position P2a. The overlap between the back cover 2b and the second body 5 is at a maximum when the foldable assembly 1 is in the first folded end position P2a, as shown in, e.g., Fig 11.

In a further embodiment, the display 2a or the back cover 2b may be fixedly connected to the first body 4 and second body 5 of the support layer 3. The support layer 3 comprises sliding rails 11 interconnecting the pivot hinge 6 of the support layer 3 and the second body 5, and pivoting the first body 4 or the second body 5 around the pivot hinge 6 actuates the linear actuator 7 of the support layer 3. The linear actuator 7 urges the second body 5 to slide, along the sliding rails 11, in relation to the pivot hinge 6 such that the distance between the pivot hinge 6 and the second body 5 varies, as shown in Fig. 12. The distance between the pivot hinge 6 and the second body 5 is at a minimum when the foldable assembly 1 is in the first folded end position P2a.

The foldable assembly 1 may, correspondingly, be moveable between an unfolded position P1 and a second folded end position P2b, the distance between the pivot hinge 6 and the second body 5 being at a maximum when the foldable assembly 1 is in the second folded end position P2b. The overlap between the display 2a and the second body 5 is at a maximum when the foldable assembly 1 is in the second folded end position P2b and/or the overlap between the back cover 2b and the second body 5 is at a minimum when the foldable assembly 1 is in the second folded end position P2b.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

## Claims

1. A foldable assembly (1) for an electronic device, said foldable assembly (1) comprising a foldable first surface layer (2a) superimposed onto a foldable support layer (3),
said support layer (3) comprising a first body (4), a second body (5), and a pivot hinge (6), said pivot hinge (6) interconnecting said first body (4) and said second body (5),
said first body (4) and said second body (5) being pivotable relative each other around an assembly rotation axis (A1) of said pivot hinge (6) such that said foldable assembly (1) is moveable between an unfolded position (P1) and at least one folded end position (P2),
said first body (4) and said second body (5) being aligned in a common plane when said foldable assembly (1) is in said unfolded position (P1),
said first body (4) being superimposed onto said second body (5) when said foldable assembly (1) is in said folded end position (P2),
said support layer (3) further comprising at least one linear actuator (7) extending at least partially through said pivot hinge (6),
a first end (7a) of said linear actuator (7) being connected to said first body (4) and
a second, opposite end (7b) of said linear actuator (7) being connected to one of said first surface layer (2a) and said second body (5),
an actuator axis (A2) extending between said first (7 a) and second (7b) ends and perpendicular to said assembly rotation axis (A1),
wherein said first body (4) and/or said second body (5) are adapted to pivot around said assembly rotation axis (A1) and to actuate said
linear actuator (7) such that said linear actuator (7) urges one of said first surface layer (2a) and said second body (5) to move, in relation to said first body (4), along said actuator axis (A2).

2. The foldable assembly (1) according to claim 1, wherein said support layer (3) has a first neutral axis (N1) and said first surface layer (2a) has a second neutral axis (N2),
said first neutral axis (N1) extending parallel to said second neutral axis (N2), and
said first neutral axis (N1) being offset from said second neutral axis (N2) along an offset axis (A3) extending perpendicular to said assembly rotation axis (A1) and perpendicular to said actuator axis (A2).

3. The foldable assembly (1) according to claim 1 or 2, wherein a first dimension of a first outer surface (8a) of said pivot hinge (6) is larger than a corresponding second dimension of a second outer surface (8b) of said pivot hinge (6) when said foldable assembly (1) is in said folded end position (P2),
said linear actuator (7) being actuated by a difference between said first dimension and said second dimension.

4. The foldable assembly (1) according to any one of the previous claims, wherein said pivot hinge (6) comprises a row of at least partially tapered hinge blades (9) interconnected by means of a connection element (10) extending along said actuator axis (A2).

5. The foldable assembly (1) according to any one of the previous claims, wherein said foldable assembly (1) comprises a foldable second surface layer (2b) superimposed onto said support layer (3),
said second end of said linear actuator (7) being connected to at least one of said first surface layer (2a) and said second surface layer (2b),
said linear actuator (7) urging said first surface layer (2a) and said second surface layer (2b) to move, in relation to said pivot hinge (6), along said actuator axis (A2).

6. The foldable assembly (1) according to claim 5, wherein said first surface layer (2a) moves in a first direction and said second surface layer (2b) moves in an opposite second direction along said actuator axis (A2).

7. The foldable assembly (1) according to claim 5 or 6, wherein said support layer (3) further comprises sliding rails (11) interconnecting said pivot hinge (6) and said second body (5), said second body (5) being arranged to move along said sliding rails (11) along said actuator axis (A2) in response to actuation of said linear actuator (7).

8. The foldable assembly (1) according to any one of claim 2 to 7, wherein said linear actuator (7) comprises
- a rotation shaft (12),
- at least one first linear drive arrangement (13, 13a, 13b) interconnected with said rotation shaft (12) and said first body (4), and extending through said pivot hinge (6),
- at least one second linear drive arrangement (17) interconnected with said rotation shaft (12),
said first linear drive arrangement (13) and said second linear drive arrangement (17) being linearly actuated in one direction, or two directions simultaneously, along said actuator axis (A2).

9. The foldable assembly (1) according to any one of claims 2 to 8, wherein said rotation shaft (12) extends perpendicular to said first neutral axis (N1) and said second neutral axis (N2), said rotation shaft (12) comprising a first toothed section (21), said second body (5) comprising a second toothed section (22) engaging said first toothed section (21),
wherein movement of said first linear drive arrangement (13) along said actuator axis (A2) generates a first rotation of said rotation shaft (12) and said first toothed section (21), said first rotation moving said second body (5) in a first direction along said actuator axis (A2), and wherein an opposite movement of said first linear drive arrangement (13) along said actuator axis (A2) generates a second opposite rotation of said rotation shaft (12) and said first toothed section (21), said second rotation moving said second body (5) in a second direction along said actuator axis (A2).

10. The foldable assembly (1) according to any one of claims 2 to 8, wherein said rotation shaft (12) extends in parallel with said assembly rotation axis (A1), a rotation shaft (12) center axis intersecting said first neutral axis (N1).

11. The foldable assembly (1) according to any one of claims 8 to 10, wherein said second linear drive arrangement (17) is connected to said first surface layer (2a) or said second surface layer (2b), said first surface layer (2a) and said second surface layer (2b) being moved in opposite directions, along said actuator axis (A2), when said linear actuator (7) is actuated.

12. The foldable assembly (1) according to any one of claims 8 to 11, wherein said first linear drive arrangement (13, 13a, 13b) and/or said second linear drive arrangement (17) comprises at least one of a chain, a wire, a rack, and a sheet.

13. The foldable assembly (1) according to any one of claims 10 to 12, wherein said rotation shaft (12) comprises pinions (14, 14a, 14b) and/or sections (16) having different diameters, at least one of said first linear drive arrangement (13, 13a, 13b) and said second linear drive arrangement (17) being interconnected with each pinion (14) or shaft diameter section (16).

14. The foldable assembly (1) according to any one of claims 10 to 13, wherein said first linear drive arrangement (13, 13a, 13b) comprises at least one folding section (19, 19a, 19b), extending through said pivot hinge (6), and at least one linear section (20, 20a, 20b) interconnected with said folding section (19, 19a, 19b), and said rotation shaft (12) comprises a first pinion (14a), said linear section (20) comprising a first rack (20a) engaging said first pinion (14a) at a first location and extending along said actuator axis (A2).

15. The foldable assembly (1) according to claim 14, wherein movement of said first rack (20a) in a first direction along said actuator axis (A2) initiates a first rotation of said first pinion (14a) and said rotation shaft (12), and wherein movement of said first rack (20a) in an opposite, second direction along said actuator axis (A2) initiates an opposite, second rotation of said first pinion (14a) and said rotation shaft (12).

## Patentansprüche

1. Faltbare Anordnung (1) für eine elektronische Vorrichtung, wobei die faltbare Anordnung (1) eine faltbare erste Oberflächenschicht (2a) umfasst, die eine faltbare Trägerschicht (3) überlagert,
wobei die Trägerschicht (3) einen ersten Körper (4), einen zweiten Körper (5) und ein Schwenkscharnier (6) umfasst, wobei das Schwenkscharnier (6) den ersten Körper (4) und den zweiten Körper (5) miteinander verbindet,
wobei der erste Körper (4) und der zweite Körper (5) relativ zueinander um eine Anordnungsdrehachse (A1) des Schwenkscharniers (6) schwenkbar sind, so dass die faltbare Anordnung (1) zwischen einer entfalteten Position (P1) und mindestens einer gefalteten Endposition (P2) bewegbar ist,
wobei der erste Körper (4) und der zweite Körper (5) in einer gemeinsamen Ebene ausgerichtet sind, wenn sich die faltbare Anordnung (1) in der entfalteten Position (P1) befindet,
wobei der erste Körper (4) den zweiten Körper (5) überlagert, wenn sich die faltbare Anordnung (1) in der gefalteten Endposition (P2) befindet,
wobei die Trägerschicht (3) ferner mindestens einen Linearaktuator (7) umfasst, der sich mindestens teilweise durch das Schwenkscharnier (6) erstreckt,
wobei ein erstes Ende (7a) des Linearaktuators (7) mit dem ersten Körper (4) verbunden ist und
ein zweites, gegenüberliegendes Ende (7b) des Linearaktuators (7) mit einem von der ersten Oberflächenschicht (2a) und dem zweiten Körper (5) verbunden ist,
eine Aktuatorachse (A2), die sich zwischen dem ersten (7a) und zweiten (7b) Ende erstreckt und senkrecht zu der Drehachse (A1) der Anordnung steht,
wobei der erste Körper (4) und/oder der zweite Körper (5) dazu geeignet sind, um die Anordnungsdrehachse (A1) zu schwenken und um den Linearaktuator (7) zu betätigen, so dass der Linearaktuator (7) eines von der ersten Oberflächenschicht (2a) und dem zweiten Körper (5) dazu zwingt, sich in Bezug auf den ersten Körper (4) entlang der Aktuatorachse (A2) zu bewegen.

2. Faltbare Anordnung (1) nach Anspruch 1, wobei die Trägerschicht (3) eine erste neutrale Achse (N1) aufweist und die erste Oberflächenschicht (2a) eine zweite neutrale Achse (N2) aufweist,
wobei sich die erste neutrale Achse (N1) parallel zu der zweiten neutralen Achse (N2) erstreckt, und
wobei die erste neutrale Achse (N1) von der zweiten neutralen Achse (N2) entlang einer versetzten Achse (A3) versetzt ist, die sich senkrecht zu der Anordnungsdrehachse (A1) und senkrecht zu der Aktuatorachse (A2) erstreckt.

3. Faltbare Anordnung (1) nach Anspruch 1 oder 2, wobei eine erste Abmessung einer ersten Außenoberfläche (8a) des Schwenkscharniers (6) größer als eine entsprechende zweite Abmessung einer zweiten Außenoberfläche (8b) des Schwenkscharniers (6) ist, wenn sich die faltbare Anordnung (1) in der gefalteten Endposition (P2) befindet,
wobei der Linearaktuator (7) durch eine Differenz zwischen der ersten Dimension und der zweiten Dimension betätigt wird.

4. Faltbare Anordnung (1) nach einem der vorstehenden Ansprüche, wobei das Schwenkscharnier (6) eine Reihe von mindestens teilweise konischen Scharnierblättern (9) umfasst, die durch ein Verbindungselement (10) miteinander verbunden sind, das sich entlang der Betätigungsachse (A2) erstreckt.

5. Faltbare Anordnung (1) nach einem der vorstehenden Ansprüche, wobei die faltbare Anordnung (1) eine faltbare zweite Oberflächenschicht (2b) umfasst, die die Trägerschicht (3) überlagert,
wobei das zweite Ende des Linearaktuators (7) mit mindestens einer der ersten Oberflächenschicht (2a) und der zweiten Oberflächenschicht (2b) verbunden ist, wobei der Linearaktuator (7) die erste Oberflächenschicht (2a) und die zweite Oberflächenschicht (2b) dazu zwingt, sich in Bezug auf das Schwenkscharnier (6) entlang der Aktuatorachse (A2) zu bewegen.

6. Faltbare Anordnung (1) nach Anspruch 5, wobei sich die erste Oberflächenschicht (2a) in eine erste Richtung und die zweite Oberflächenschicht (2b) in eine entgegengesetzte zweite Richtung entlang der Aktuatorachse (A2) bewegt.

7. Faltbare Anordnung (1) nach Anspruch 5 oder 6, wobei die Trägerschicht (3) ferner Gleitschienen (11) umfasst, die das Schwenkscharnier (6) und den zweiten Körper (5) miteinander verbinden, wobei der zweite Körper (5) so angeordnet ist, dass er sich als Reaktion auf die Betätigung des Linearaktuators (7) entlang der Gleitschienen (11) entlang der Aktuatorachse (A2) bewegt.

8. Faltbare Anordnung (1) nach einem der Ansprüche 2 bis 7, wobei der Linearaktuator (7) umfasst:
- eine Drehwelle (12),
- mindestens eine erste Linearantriebsanordnung (13, 13a, 13b), die mit der Drehwelle (12) und dem ersten Körper (4) verbunden ist und sich durch das Schwenkscharnier (6) erstreckt,
- mindestens eine zweite Linearantriebsanordnung (17), die mit der Drehwelle (12) verbunden ist,
wobei die erste Linearantriebsanordnung (13) und die zweite Linearantriebsanordnung (17) in einer Richtung oder in zwei Richtungen gleichzeitig entlang der Aktuatorachse (A2) linear betätigt werden.

9. Faltbare Anordnung (1) nach einem der Ansprüche 2 bis 8, wobei sich die Drehwelle (12) senkrecht zu der ersten neutralen Achse (N1) und der zweiten neutralen Achse (N2) erstreckt, wobei die Drehwelle (12) einen ersten gezahnten Abschnitt (21) umfasst, wobei der zweite Körper (5) einen zweiten gezahnten Abschnitt (22) umfasst, der in den ersten gezahnten Abschnitt (21) eingreift,
wobei eine Bewegung der ersten Linearantriebsanordnung (13) entlang der Aktuatorachse (A2) eine erste Drehung der Drehwelle (12) und des ersten gezahnten Abschnitts (21) erzeugt, wobei die erste Drehung den zweiten Körper (5) in eine erste Richtung entlang der Aktuatorachse (A2) bewegt, und wobei eine entgegengesetzte Bewegung der ersten Linearantriebsanordnung (13) entlang der Aktuatorachse (A2) eine zweite entgegengesetzte Drehung der Drehwelle (12) und des ersten gezahnten Abschnitts (21) erzeugt, wobei die zweite Drehung den zweiten Körper (5) in eine zweite Richtung entlang der Aktuatorachse (A2) bewegt.

10. Faltbare Anordnung (1) nach einem der Ansprüche 2 bis 8, wobei sich die Drehwelle (12) parallel zu der Anordnungsdrehachse (A1) erstreckt, wobei eine Mittelachse der Drehwelle (12) die erste neutrale Achse (N1) schneidet.

11. Faltbare Anordnung (1) nach einem der Ansprüche 8 bis 10, wobei die zweite Linearantriebsanordnung (17) mit der ersten Oberflächenschicht (2a) oder der zweiten Oberflächenschicht (2b) verbunden ist, wobei die erste Oberflächenschicht (2a) und die zweite Oberflächenschicht (2b) in entgegengesetzte Richtungen entlang der Aktuatorachse (A2) bewegt werden, wenn der Linearaktuator (7) betätigt wird.

12. Faltbare Anordnung (1) nach einem der Ansprüche 8 bis 11, wobei die erste Linearantriebsanordnung (13, 13a, 13b) und/oder die zweite Linearantriebsanordnung (17) mindestens eines von einer Kette, einem Draht, einer Zahnstange und einem Blech umfasst.

13. Faltbare Anordnung (1) nach einem der Ansprüche 10 bis 12, wobei die Drehwelle (12) Ritzel (14, 14a, 14b) und/oder Abschnitte (16) mit unterschiedlichen Durchmessern umfasst, wobei mindestens eine von der ersten Linearantriebsanordnung (13, 13a, 13b) und der zweiten Linearantriebsanordnung (17) mit jedem Ritzel (14) oder Wellendurchmesserabschnitt (16) verbunden ist.

14. Faltbare Anordnung (1) nach einem der Ansprüche 10 bis 13, wobei die erste Linearantriebsanordnung (13, 13a, 13b) mindestens einen Faltabschnitt (19, 19a, 19b), der sich durch das Schwenkscharnier (6) erstreckt, und mindestens einen Linearabschnitt (20, 20a, 20b) umfasst, der mit dem Faltabschnitt (19, 19a, 19b) verbunden ist, und die Drehwelle (12) ein erstes Ritzel (14a) umfasst, wobei der Linearabschnitt (20) eine erste Zahnstange (20a) umfasst, die an einer ersten Stelle in das erste Ritzel (14a) eingreift und sich entlang der Aktuatorachse (A2) erstreckt.

15. Faltbare Anordnung (1) nach Anspruch 14, wobei eine Bewegung der ersten Zahnstange (20a) in eine erste Richtung entlang der Aktuatorachse (A2) eine erste Drehung des ersten Ritzels (14a) und der Drehwelle (12) auslöst, und wobei eine Bewegung der ersten Zahnstange (20a) in eine entgegengesetzte, zweite Richtung entlang der Aktuatorachse (A2) eine entgegengesetzte, zweite Drehung des ersten Ritzels (14a) und der Drehwelle (12) auslöst.

## Revendications

1. Ensemble pliable (1) pour un dispositif électronique, ledit ensemble pliable (1) comprenant une première couche de surface pliable (2a) superposée à une couche de support pliable (3),
ladite couche de support (3) comprenant un premier corps (4), un second corps (5) et une charnière de pivot (6), ladite charnière de pivot (6) reliant ledit premier corps (4) et ledit second corps (5),
ledit premier corps (4) et ledit second corps (5) pouvant pivoter l'un par rapport à l'autre autour d'un axe de rotation de l'ensemble (A1) de ladite charnière de pivot (6) de telle sorte que ledit ensemble pliable (1) est mobile entre une position dépliée (P1) et au moins une position d'extrémité pliée (P2),
ledit premier corps (4) et ledit second corps (5) étant alignés dans un plan commun lorsque ledit ensemble pliable (1) se trouve dans ladite position dépliée (P1),
ledit premier corps (4) étant superposé audit second corps (5) lorsque ledit ensemble pliable (1) se trouve dans ladite position d'extrémité pliée (P2),
ladite couche de support (3) comprenant en outre au moins un actionneur linéaire (7) s'étendant au moins partiellement à travers ladite charnière de pivot (6),
une première extrémité (7a) dudit actionneur linéaire (7) étant liée audit premier corps (4) et
une seconde extrémité opposée (7b) dudit actionneur linéaire (7) étant liée à l'un parmi ladite première couche de surface (2a) et ledit second corps (5),
un axe d'actionneur (A2) s'étendant entre lesdites première (7a) et seconde (7b) extrémités et perpendiculairement audit axe de rotation de l'ensemble (A1),
dans lequel ledit premier corps (4) et/ou ledit second corps (5) sont adaptés pour pivoter autour dudit axe de rotation de l'ensemble (A1) et pour actionner ledit actionneur linéaire (7) de telle sorte que ledit actionneur linéaire (7) pousse l'un parmi ladite première couche de surface (2a) et ledit second corps (5) à se déplacer, par rapport audit premier corps (4), le long dudit axe d'actionneur (A2).

2. Ensemble pliable (1) selon la revendication 1, dans lequel ladite couche de support (3) a un premier axe neutre (N1) et ladite première couche de surface (2a) a un second axe neutre (N2),
ledit premier axe neutre (N1) s'étendant parallèlement audit second axe neutre (N2), et ledit premier axe neutre (N1) étant décalé par rapport audit second axe neutre (N2) le long d'un axe de décalage (A3) s'étendant perpendiculairement audit axe de rotation de l'ensemble (A1) et perpendiculairement audit axe d'actionneur (A2).

3. Ensemble pliable (1) selon la revendication 1 ou 2, dans lequel une première dimension d'une première surface extérieure (8a) de ladite charnière de pivot (6) est supérieure à une seconde dimension correspondante d'une seconde surface extérieure (8b) de ladite charnière de pivot (6) lorsque ledit ensemble pliable (1) se trouve dans ladite position d'extrémité pliée (P2),
ledit actionneur linéaire (7) étant actionné par une différence entre ladite première dimension et ladite seconde dimension.

4. Ensemble pliable (1) selon l'une quelconque des revendications précédentes, dans lequel ladite charnière de pivot (6) comprend une rangée de lames de charnière au moins partiellement effilées (9), reliées au moyen d'un élément de liaison (10) s'étendant le long dudit axe d'actionneur (A2).

5. Ensemble pliable (1) selon l'une quelconque des revendications précédentes, dans lequel ledit ensemble pliable (1) comprend une seconde couche de surface pliable (2b) superposée à ladite couche de support (3),
ladite seconde extrémité dudit actionneur linéaire (7) étant liée à au moins l'une parmi ladite première couche de surface (2a) et ladite seconde couche de surface (2b), ledit actionneur linéaire (7) poussant ladite première couche de surface (2a) et ladite seconde couche de surface (2b) à se déplacer, par rapport à ladite charnière de pivot (6), le long dudit axe d'actionneur (A2).

6. Ensemble pliable (1) selon la revendication 5, dans lequel ladite première couche de surface (2a) se déplace dans une première direction et ladite seconde couche de surface (2b) se déplace dans une seconde direction opposée le long dudit axe d'actionneur (A2).

7. Ensemble pliable (1) selon la revendication 5 ou 6, dans lequel ladite couche de support (3) comprend en outre des rails de coulissement (11) reliant ladite charnière de pivot (6) et ledit second corps (5), ledit second corps (5) étant agencé pour se déplacer le long desdits rails de coulissement (11) le long dudit axe d'actionneur (A2) en réponse à l'actionnement dudit actionneur linéaire (7).

8. Ensemble pliable (1) selon l'une quelconque des revendications 2 à 7, dans lequel ledit actionneur linéaire (7) comprend
- un arbre de rotation (12),
- au moins un premier agencement d'entraînement linéaire (13, 13a, 13b) relié audit arbre de rotation (12) et audit premier corps (4), et s'étendant à travers ladite charnière de pivot (6),
- au moins un second agencement d'entraînement linéaire (17) relié audit arbre de rotation (12),
ledit premier agencement d'entraînement linéaire (13) et ledit second agencement d'entraînement linéaire (17) étant actionnés linéairement dans une direction, ou deux directions simultanément, le long dudit axe d'actionneur (A2).

9. Ensemble pliable (1) selon l'une quelconque des revendications 2 à 8, dans lequel ledit arbre de rotation (12) s'étend perpendiculairement audit premier axe neutre (N1) et audit second axe neutre (N2), ledit arbre de rotation (12) comprenant une première section dentée (21), ledit second corps (5) comprenant une seconde section dentée (22) entrant en prise avec ladite première section dentée (21),
dans lequel un mouvement dudit premier agencement d'entraînement linéaire (13) le long dudit axe d'actionneur (A2) génère une première rotation dudit arbre de rotation (12) et de ladite première section dentée (21), ladite première rotation déplaçant ledit second corps (5) dans une première direction le long dudit axe d'actionneur (A2), et dans lequel un mouvement opposé dudit premier agencement d'entraînement linéaire (13) le long dudit axe d'actionneur (A2) génère une seconde rotation opposée dudit arbre de rotation (12) et de ladite première section dentée (21), ladite seconde rotation déplaçant ledit second corps (5) dans une seconde direction le long dudit axe d'actionneur (A2).

10. Ensemble pliable (1) selon l'une quelconque des revendications 2 à 8, dans lequel ledit arbre de rotation (12) s'étend parallèlement audit axe de rotation de l'ensemble (A1), un axe central de l'arbre de rotation (12) coupant ledit premier axe neutre (N1).

11. Ensemble pliable (1) selon l'une quelconque des revendications 8 à 10, dans lequel ledit second agencement d'entraînement linéaire (17) est lié à ladite première couche de surface (2a) ou à ladite seconde couche de surface (2b), ladite première couche de surface (2a) et ladite seconde couche de surface (2b) étant déplacées dans des directions opposées, le long dudit axe d'actionneur (A2), lorsque ledit actionneur linéaire (7) est actionné.

12. Ensemble pliable (1) selon l'une quelconque des revendications 8 à 11, dans lequel ledit premier agencement d'entraînement linéaire (13, 13a, 13b) et/ou ledit second agencement d'entraînement linéaire (17) comprennent au moins l'un parmi une chaîne, un fil, une crémaillère et une feuille.

13. Ensemble pliable (1) selon l'une quelconque des revendications 10 à 12, dans lequel ledit arbre de rotation (12) comprend des pignons (14, 14a, 14b) et/ou des sections (16) ayant des diamètres différents, au moins l'un parmi ledit premier agencement d'entraînement linéaire (13, 13a, 13b) et ledit second agencement d'entraînement linéaire (17) étant relié à chaque pignon (14) ou section de diamètre d'arbre (16).

14. Ensemble pliable (1) selon l'une quelconque des revendications 10 à 13, dans lequel ledit premier agencement d'entraînement linéaire (13, 13a, 13b) comprend au moins une section pliable (19, 19a, 19b), s'étendant à travers ladite charnière de pivot (6), et au moins une section linéaire (20, 20a, 20b) reliée à ladite section de pliage (19, 19a, 19b), et ledit arbre de rotation (12) comprend un premier pignon (14a), ladite section linéaire (20) comprenant une première crémaillère (20a) entrant en prise avec ledit premier pignon (14a) à un premier emplacement et s'étendant le long dudit axe d'actionneur (A2).

15. Ensemble pliable (1) selon la revendication 14, dans lequel le mouvement de ladite première crémaillère (20a) dans une première direction le long dudit axe d'actionneur (A2) lance une première rotation dudit premier pignon (14a) et dudit arbre de rotation (12), et dans lequel le mouvement de ladite première crémaillère (20a) dans une seconde direction opposée le long dudit axe d'actionneur (A2) lance une seconde rotation opposée dudit premier pignon (14a) et dudit arbre de rotation (12).
